# EUROPEAN PATENT APPLICATION

(11) **EP 2 875 732 A1**
(43) Date of publication of application: **27.05.2015**
(21) Application number: 13194129.6
(22) Date of filing: 22.11.2013
(51) Int. Cl.: A23C 19/09, A23L 1/0534, A23L 1/01, A23C 3/00

(54) **Stabilised cheese products**

(71) Applicant: Crisp Sensation Holding S.A., 1208 Geneva (CH)
(72) Inventor: van der Kolk, Bianca, 5212 XH 's-Hertogenbosch (NL); Michiels, Wilhelmus Johannes Gerardus, 6031 GS Nederweert (NL)
(74) Representative: Browne, Robin Forsythe

(57) **Abstract**

A method of producing a frozen microwaveable, coated food product, comprising the steps of;
providing pieces of mozzarella cheese, the pieces having a maximum dimension of 1 cm;
mixing the pieces of cheese with a stabilising composition comprising:

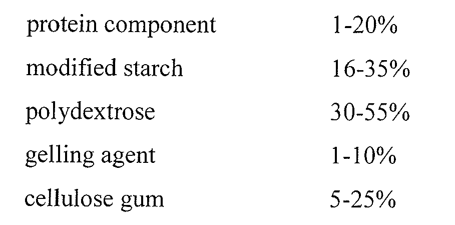

wherein the percentages of the ingredients are by dry weight and are selected from the ranges quoted to total 100%;
water;
wherein the protein component, starch, polydextrose and gelling agent are added as solid phase ingredients to the cheese with mixing, followed by addition of a solution comprising:
cellulose gum, and
water;

the method further comprising the subsequent steps of:
mixing to form a homogenous cheese dough;
forming the dough into portions;
freezing the portions and maintaining the frozen portions for at least eight hours;
applying a pre-coating to the frozen portions to produce precoated portions;
applying a batter coating to the pre-coated portions to produce batter coated portions;
applying one or more layers of crumb to the batter coated portions to provide a crumb coated portion;
frying the crumb coated portions to produce fried portions; and
cryogenically freezing the fried portions.

## Description

This invention relates to stabilised cheese products and to a method of making stabilised cheese products. The invention relates particularly, but not exclusively, to stabilised products comprising mozzarella cheese or other semi-soft cheeses having a high moisture content.

Mozzarella is a fresh cheese originally from Southern Italy, traditionally made from Italian buffalo and later cow's milk by the pasta filata method. Fresh mozzarella is generally white, but may vary seasonally to slightly yellow depending on the animal's diet. It is a semi-soft cheese. Due to the high moisture content it is traditionally served the day after it is made.

Food products containing portions of mozzarella, such as mozzarella sticks, are liable to melt and leak in a conventional oven and are difficult or impossible to heat in a microwave oven due to vaporisation of the high moisture content within the cheese.

Mozzarella sticks are generally provided with a batter and crumb coating. Steam and liquified cheese can adversely affect the sealing properties and crispness of a batter and crumb coating. This may result in a product with poor mouth feel and which may be commercially unsatisfactory.

According to a first aspect of the present invention, there is provided a method of producing a frozen, microwaveable, coated food product, the method comprising the steps of;
providing pieces of mozzarella cheese, the pieces having a maximum dimension of 1 cm;
mixing the pieces of cheese with a stabilising composition comprising:

| | |
|---|---|
| protein component | 1-20% |
| modified starch | 16-35% |
| polydextrose | 30-55% |
| gelling agent | 1-10% |
| cellulose gum | 5-25% |

wherein the percentages of the ingredients are by dry weight and are selected from the ranges quoted to total 100%;
water;
wherein the protein component, starch, polydextrose and gelling agent are added as solid phase ingredients to the cheese with mixing, followed by addition of a solution comprising:
cellulose gum, and
water;
the method further comprising the subsequent steps of:
mixing to form a homogenous cheese dough;
forming the dough into portions;
freezing the portions and maintaining the frozen portions for at least eight hours;
applying a pre-coating to the frozen portions to produce precoated portions;
applying a batter coating to the pre-coated portions to produce batter coated portions;
applying one or more layers of crumb to the batter coated portions to provide a crumb coated portion;
frying the crumb coated portions to produce fried portions; and
cryogenically freezing the fried portions.

According to a second aspect of the present invention, there is provided a frozen, microwaveable, coated food product comprising;
a core of edible material having a weight equal to 15 to 95 wt% of the food product, the core consisting of or including mozzarella cheese, a stabilising composition, optional flavourings and other ingredients;
a fried coating that envelopes the core of edible material having a weight equal to 5 to 85 wt% of the food product, the coating comprising at least three coating layers, including an inner layer, an outer crumb layer and a batter layer that separates the inner layer from the outer crumb layer;
wherein the stabilising composition comprises:

| | |
|---|---|
| protein component | 1-20% |
| modified starch | 16-35% |
| polydextrose | 30-55% |
| gelling agent | 1-10% |
| cellulose gum | 5-25% |

wherein the percentages of the ingredients are by dry weight and are selected from the ranges quoted to total 100%.

Preferred products are made by the method of the first aspect of this invention.

The portions may comprise sticks, balls or otherwise shaped pieces having a typical weight of 5 to 50g, preferably, 10 to 30g, typically 10 to 20g, for example about 15g.

The invention provides a microwaveable and/or ovenable frozen product which has been cooked before freezing and which can be reheated in a microwave or combination oven to give a satisfactory product which does not leak during reheating and retains a crisp crumb coating. The core may consist entirely of stabilised mozzarella and may contain a substantial, particularly more than 50%, typically more than 80%, of mozzarella together with flavourings and other ingredients. Products of this invention may also be reheated using a conventional thermal oven.

The amount of the stabiliser, by dry weight excluding water, may be 2% to 10%, preferably 2.5% to 7%, more preferably 3% to 6% as a percentage of the weight of the core.

The protein component may comprise ingredients selected from the group consisting of: egg albumen, whey protein, protein isolate and mixtures thereof. A suitable protein isolate is soya protein isolate. Use of egg albumen is preferred.

The gelling agent is preferably a hydrocolloid. Suitable hydrocolloids may be selected from the group consisting of: xanthan gum, carageenan gum, guar gum and mixtures thereof. Use of xanthan gum, guar gum or mixtures thereof is particularly preferred Use of xanthan gum or a mixture of hydrocolloids containing xanthan gum is especially preferred. An amount of about 3% to about 10%, particularly about 6% is preferred.

Alternative starches are selected from modified starches such as high amylose maize starch, for example Hylon ® VII (National Starch). Alternatively native starches may be employed. An amount of 10% to 40% preferably 20% to 30%, typically about 24% may be employed.

The polydextrose may be used in a preferred amount of 35% to 45% preferably about 40%. Litesse™ manufactured by Danisco may be employed.

The cellulose gum is preferably methyl cellulose or hydroxypropyl methylcellulose, for example METHOCEL® A4C. An amount of 10% to 30%, preferably 12% to 18% or more preferably about 15% may be used.

The method may further comprise the step of applying a vacuum to the cheese dough for a sufficient period to remove air from the dough. A pressure of about 0.9 bar may be applied for about 30 min. The cheese dough may be stirred to improve the removal of air.

The pre-coating may comprise a liquid, preferably a liquid wash, for example a milk wash, to moisten the surface, followed by a coating of fine inner crumb.

The precoating preferably further comprises a coating of fine bonding crumb applied to the surface of the substrate. The fine crumb may have a particle size from about 0.8 mm to about 1.5 mm. The fine crumb adheres to the milk wash to encase the cheese dough substrate.

An important feature of the present method lies in the application of a bonding or inner crumb layer before the application of a batter. This crumb layer is bound to the substrate by the milk wash liquid and forms a stabilising thermal barrier underlying the batter and any optional outer crumb coating. This may provide a barrier to escape of moisture and ingress of oil during frying. The inner crumb layer forms a shell which serves to protect the surface of the cheese substrate from excessive local heating during frying.

Particularly good results can be obtained if the bonding crumb employed is a milled farinaceous dough extrudate containing 0.05 to 5 wt %, more preferably 0.1 to 3.0 % by dry weight of added hydrocolloid, wherein the hydrocolloid is added to the dough during extrusion. Such hydrocolloid impregnated crumb is disclosed in WO2010/001101, the disclosure of which is incorporated herein by reference for all purposes.

The bonding crumb employed in the present method typically has a mass weighted average particle size of less than 2 mm. More preferably, the bonding crumb has a mass weighted average particle size of 0.1 to 1.5 mm, even more preferably of 0.15 to 1 mm, and most preferably of 0.25 to 0.9 mm.

The hydrocolloid used in the bonding crumb may be selected from natural gums, modified gums, agar, carrageenan, furcellaran, arabinogalactan, xanthan, and combinations thereof. Preferably, the hydrocolloid is selected from natural gums and combinations thereof.

Examples of natural gums that may be employed as added hydrocolloid in the milled farinaceous dough extrudate include guar gum, xanthan gum, locust bean gum, gum Arabic, tragacanth, gum karaya, gum ghatti and combinations thereof.

Most preferably, the added hydrocolloid may be selected from guar gum, locust bean gum, xanthan gum and combinations thereof.

The batter that is applied onto the fine bonding crumb coated portion in accordance with the present method preferably comprises, calculated by weight of dry matter, 20-55 wt.% of starch; 20-55 wt. % of flour; and 3-20 wt.% of egg solids. Examples of batter formulations that may suitably be employed in the present process are described in WO 96/32026. The starch contained in the batter may be provided by a flour component or it may have been added as a purified starch ingredient, for example high amylose starch.

Typically, the batter has a viscosity of 200-1000 cP, more preferably of 300-800 cP, most preferably of 500-600 cP, measured using a Brookfield viscometer with a number 3 spindle at 60 rpm when it is applied to the crumb coated portion.

The batter may be applied onto the inner bonding crumb coated portion by an apparatus comprising a bath containing the batter through which the crumb coated portion is passed by means of a conveyor. A tempura applicator is preferred, that is a bath containing circulating batter through which a conveyor passes. e.g. TempuDipper^{™} (CFS) although one may also use a curtain-type e.g. WetCoater^{™} (CFS) applicator or other convenient apparatus of a similar specification.

A preferred batter for use with microwaveable products has the following composition

| Ingredient | % |
|---|---|
| soya flour (Hisoy) | 31.0 |
| high amylose starch (Hylon 7) | 48.0 |
| cellulose gum (Methocel A4M) | 2.0 |
| whole egg (Henningsen W1) | 13.0 |
| D-xylose | 3.0 |
| monosodium phosphate | 1.9 |
| ammonium bicarbonate | 0.7 |
| glucono D-Iactone | 0.7 |
| sodium acid pyrophosphate | 0.3 |
| alpha-amylase | 0.1 |
| | 100.00 |

A preferred batter for use with an ovenable composition may comprise flour, whole egg powder, milk powder, water and optional further ingredients.

Advantageously, the coating crumb employed in the present method has a larger particle size than the bonding crumb. Preferably, the coating crumb has a mass weighted average particles size that is at least 50% higher than the mass weighted average particle size of the bonding crumb.

The present method may suitably employ a crumb coating apparatus that comprises a first conveyor and a second endless conveyor located below an end of the first conveyor, and passing beneath a flow of fine crumb particles so that portions fall from the first conveyor onto a layer of particles on the second conveyor. The second conveyor may pass through a curtain of fine crumb falling onto the conveyor surface so that the portion falls onto the crumb causing the crumb to adhere to the surface layer of the aqueous precoating, and is then coated by the curtain of falling crumb particles. The apparatus may comprise a dispenser having an outlet extending across of the conveyor to provide the curtain of fine crumb extending across the path of the portions on the conveyor. A roller may be located above the conveyor on the exist side to bear on the coated portion to improve adhesion of the fine crumb.

Crumb may be applied in excess to the portion using a crumb applicator for example a CrumbMaster™ (CFS). The crumb coated portion may be passed through a roller to improve adhesion.

The total amount of liquid, batter and crumb that is applied onto the portion in the present method is preferably selected such that, after frying, the fried portion has a weight that exceeds the weight of the uncoated portion of solid substrate by 25-100%, preferably 30-60%.

The one or more coatings of crumb together typically represent 5-80 wt.%, preferably 15-50 wt.% of the fried portion.

The breaded portion is fried to cook the substrate and coating layers. The period of cooking is preferably sufficient to completely cook the substrate preventing any health risk in the event that a frozen product is insufficiently reheated from the frozen state in a microwave oven. A comparatively long period of reheating in a microwave oven is undesirable since the substrate is heated from the inside by the microwave energy resulting in a loss of moisture. This may lead to a dry core and damage to the coating layers.

A homogeneous outer crumb coating, with none of the underlying batter layer being exposed is advantageous to provide a uniformly browned appearance after a prolonged period of frying. This may be compared to a shorter period of frying as commonly used for conventionally thermally cooked breaded products.

For conventional thermally cooked breaded products, a short period of frying for example 90 seconds or less has been followed by a further period of cooking in a hot air oven. This is disadvantageous for microwave cookable cheese products because the core of the substrate may melt or may not be thoroughly cooked during reheating from the frozen state. Prolonged heating of conventional products in a microwave oven leads to excessive loss of moisture and consequent damage to the coating layers.

During the frying step the breaded portion, optionally after having been coated with one or more additional crumb layers, is preferably contacted with the hot oil for 120-300 seconds, more preferably for 130-240 seconds, most preferably for 140-180 seconds.

The hot oil that is used for frying the breaded portion preferably has a temperature of 160-200°C, more preferably of 170-195°C and most preferably 175-190°C.

The oil employed preferably is a vegetable oil. The term "vegetable oil" encompasses non-modified vegetable oils, hydrogenated vegetable oils, fractions of vegetable oils (e.g. olein or stearin fractions), inter-esterified vegetable oils and combinations thereof. Pure rapeseed oil is preferred.

Preferably the core temperature of the fried portion is greater than 72°C, more preferably greater than 74°C.

The fried coating of the present food product - including all coating layers - preferably has an average thickness of 8.mm, more preferably 5 mm and most preferably of 3 mm dependent on the size of crumb used.

Frying in accordance with this invention is advantageous in comparison to flash frying followed by hot air cooking as the latter may not give a coating with desired hardness without moisture loss from the core.

The breaded portion is suitably fried by immersing the breaded portion in the hot oil, e.g. by passing it through a bath of hot oil by means of a conveyor belt. The frying apparatus preferably comprises a double layer of parallel endless belts both layers passing beneath the oil surface, a portion carried on a lower layer being prevented from floating during frying by contact with an upper layer. The belt may comprise wire screens or other perforated configurations.

The frozen products are suitably packaged for storage and distribution. Packaging under an inert atmosphere e.g. nitrogen is preferred.

The frozen product, may be reheated or cooked from the frozen state before use using an oven selected from: a microwave oven, a conventional oven or grill, deep or shallow fried, or an oven using a combination of microwave and conventional heating.

A further aspect of the invention relates to a microwaveable coated food product that is obtained by a method as defined herein before. Most preferably, said food product is a frozen coated food product.

Preferably two outer crumb layers are employed in order to reduce the occurrence of gaps in the coating. A first layer may have a dimension of 1.5mm to 2.5mm, preferably 1.5 mm to 2.5 mm. The second layer may be smaller than the first layer and may have a dimension of 0.5 mm to 4mm. Preferably 0.8 mm to 1.5 mm.

The outer crumb may be coloured to suit consumer preference.

The freezing of the crumb coated product is preferably for a period of up to 60 minutes, more preferably 35 minutes at -35°C. The product is then allowed to rest at ambient room temperature for a period of 5 to 15 minutes. This allows the outer coating layer to equilibrate before frying.

It is important that the core temperature immediately before frying is not higher than -18°C .

The frozen products may be fried in heated oil, for example for at least two minutes at 180°C. The preferred frying time is 1.5 to 3 minutes preferably about 2 minutes.

The fried products are put directly into the freezer without allowing the product to cool to room temperature.

The frozen products may be vacuum packed and stored in a freezer, preferably at a temperature of -20°C or below.

The invention is further described by means of example, but not in any limitative sense.

### Example 1

The stabiliser composition consisted of the following dry ingredients:

| | |
|---|---|
| egg powder | 15.0% |
| native corn starch | 24.0% |
| cellulose gum (Methocel A4C) | 15.0% |
| polydextrose | 40.0% |
| xanthan gum | 6.0% |
| | 100% |

A methyl cellulose solution was prepared by heating water 13.6g to 50°C and slowly stirring methyl cellulose (Methocel A4C 0.97g). The mixture was allowed to cool with occasional stirring. Stirring was stopped when the solution started to thicken at about 25°C. A vacuum was applied to the solution to remove gas bubbles and the solution was chilled to 10°C or lower.

Grated mozzarella (80.44g) having a maximum dimension of 0.5 cm was mixed with salt (0.37g), black pepper (0.06g) and nutmeg (0.06g), in a blender. Stabiliser ingredients (4.5g) were added and thoroughly mixed. The methyl cellulose solution was then added and stirred to form a homogenous mixture. A vacuum was applied to remove any entrained air. The cheese dough was formed into sticks with a weight of about 15g. The sticks were placed in a nitrogen freezer for 25 minutes at -35°C and stored in a freezer at -20°C. The frozen sticks were maintained in the freezer for at least 8 hours, preferably 12 hours to 24 hours to form a more stable product.

Following storage in the freezer, the sticks were removed and coated with a liquid wash before rolling in a fine crumb (dimension less than 0.8mm). The composition of the liquid wash may comprise milk.

The fine crumb coated sticks were coated with soya batter then rolled in crumb having a size between 1.5 mm and 2.5 mm followed by rolling in a second crumb with a size between 0.8 mm and 1.5 mm.

The crumb coated products were placed in a nitrogen freezer for 25 minutes at -35°C then fried in oil for two minutes at 180°C. The fried products were put into a nitrogen freezer for 25 minutes at -35°C, followed by vacuum packing and storage in a freezer at -20°C.

Mozzarella sticks were made with two different percentages of the stabiliser relative to the weight of the cheese substrate. A first product was made with 4.5% by dry weight of stabiliser and a second product was made with 3.0% by dry weight of stabiliser.

The product with 4.5% stabiliser was inspected after frying and did not have any cracks or lacerations. The adhesion of the coating to the product was good and the crust remained intact and formed a complete covering surrounding the product. The product was crispy and the mozzarella was elastic in consistency.

The product with 3.0% stabiliser was inspected after frying for two minutes. The products were found to have broken over the entire length but adhesion to the core was good.

With both amounts of stabiliser the adhesion of the coating was good, the products were crispy and the mozzarella was elastic.

## Claims

1. A method of producing a frozen microwaveable, coated food product, comprising the steps of;
providing pieces of cheese having a maximum dimension of 1 cm;
mixing the pieces of cheese with dry ingredients to prepare a premix, said dry ingredients including one or more hydrocolloids selected from starch, protein, polydextrose, xanthan gum, guar gum, carrageenan and pectin;
mixing the premix with an aqueous binder solution to produce a cheese dough containing at least 60 wt.% of cheese by weight of the cheese dough, said aqueous binder solution containing 2-15% of cellulose ether by weight of the binder solution;
the method further comprising the subsequent steps of:
forming the dough into portions;
freezing the portions;
applying a batter coating to the pre-coated portions to produce batter coated portions;
applying one or more layers of crumb to the batter coated portions to provide a crumb coated portion;
frying the crumb coated portions to produce fried portions; and
cryogenically freezing the fried portions.

2. A method as claimed in claim 1, wherein the aqueous binder solution contains less than 15 wt.% of dry matter.

3. A method as claimed in any preceding claim, wherein the one or more hydrocolloids include a protein component selected from the group consisting of egg albumen, whey protein, protein isolate and mixtures thereof, said protein component being present in the premix in a concentration of 0.2-2% by weight of cheese.

4. A method as claimed in any preceding claim, wherein the one or more hydrocolloids include a gelling agent selected from the group consisting of; xanthan gum, carrageenan, guar gum and mixtures thereof, said gelling agent being present in the premix in a concentration of 0.1-2% by weight of cheese.

5. A method as claimed in claim 4, wherein the gelling agent is xanthan gum.

6. A method as claimed in any preceding claim wherein the one or more hydrocolloids include native starch, said native starch being present in the premix in a concentration of 0.3-3% by weight of cheese.

7. A method as claimed in any preceding claim, wherein the one or more hydroclloids include polydextrose, said polydextrose being present in the premix in a concentration of 0.3-3% by weight of cheese.

8. A method as claimed in any preceding claim, wherein the cellulose ether is selected from methyl cellulose, ethyl cellulose, ethyl methyl cellulose, hydroxyethyl cellulose, hydroxypropyl methylcellulose and combinations thereof.

9. A method as claimed in any preceding claim, wherein the binder solution contains 3-8 wt.% of cellulose ether.

10. A method as claimed in any preceding claim, wherein the cheese dough contains at least 70 wt.% cheese and less than 15 wt.% water.

11. A method as claimed in any preceding claim, including the step of applying a vacuum to the cheese dough to remove air before forming the dough into portions.

12. A method as claimed in any preceding claim, comprising the step of applying a coating of crumb to the frozen portions before application of the batter coating.

13. A method as claimed in claim 12, wherein the crumb comprises milled farinaceous dough extrudate containing 0.05 to 5 wt % of hydrocolloid.

14. A method as claimed in any preceding claim, wherein the core temperature of the crumb coated portion is not higher than -18°C immediately before frying.

15. A frozen, microwaveable, coated food product comprising;
a core of edible material having a weight equal to 15 to 95 wt % of the food product, the core comprising:
• at least 60 wt.% cheese;
• 0.4-1.5 wt.% cellulose ether;
• 0.3-6 wt.% of one or more hydrocolloids selected from starch, protein, polydextrose, xanthan gum, guar gum, carrageenan and pectin; and
• 0-35 wt.% of other ingredients;
,
a fried coating that envelopes the core of edible material having a weight equal to 5 to 85 wt % of the food product, the coating comprising at least three coating layers, including an inner crumb layer, an outer crumb layer and a batter layer that separates the inner layer from the outer crumb layer.
